# EUROPEAN PATENT APPLICATION

(11) **EP 3 187 763 A1**
(43) Date of publication of application: **05.07.2017**
(21) Application number: 15203210.8
(22) Date of filing: 30.12.2015
(51) Int. Cl.: F16L 23/22

(54) **COUPLING FOR CONNECTING AND SEALING FLUID HANDLING COMPONENTS**

(71) Applicant: Alfa Laval Corporate AB, 221 00 Lund (SE)
(72) Inventor: ANDERSEN, Jens Folkmar, DK-7000 FREDERICIA (DK); REHHOFF, Kenneth, DK-5000 ODENSE C (DK)
(74) Representative: Alfa Laval Attorneys

(57) **Abstract**

A coupling (1) for connecting and sealing a first and a second fluid handling component (3, 4) to each other, the coupling (1) comprising annular flanges (32, 42) with abutment areas (36, 46) that are pressed against each other, such that, between the flanges (32, 42) a first annular space (12), an intermediate space (13) and a second annular space (14) are formed, wherein a gasket (5) that has a first annular sealing ring (52) is located in the first annular space (14), a second annular sealing ring (54) that is located in the second annular space (14), and an intermediate section (53) that is located in the intermediate space (13).

## Description

### Technical Field

The invention relates to a coupling for connecting and sealing a first and a second fluid handling component to each other. The coupling comprises a first annular flange that is connected to the first fluid handling component, a second annular flange that is connected to the second fluid handling component, and a flange clamp for connecting the first and second flanges to each other by pressing abutment areas of the flanges against each other. A gasket is arranged in between the annular flanges.

### Background Art

Today many different types of techniques exist for connecting fluid handling components to each other, including pipes, valves, pumps and any other process components that may be part of a system for handling fluids, either in gas form or in liquid form. It is often very important that the components are properly connected to each other. If they are not, leakage of the fluid that passes through the connected components may occur at the joint between the components.

To prevent leakage it is common to arrange a gasket between the components. The gasket is typically made of an elastomeric material and is located between flanges of the components. A flange clamp is used for pressing the flanges towards each other, which compresses the gasket such that it provides a tight seal between the components. The compression of the gasket should be sufficient to accomplish a tight seal that prevents leakage, while still not being so high that the gasket is damaged. The gasket should also be able to withstand temperature variations without being damaged, it should not be exposed to excessive wear and it should be properly aligned with the flanges.

The flanges of the fluid handling components, the gasket and the flange clamp form a so called coupling for connecting and sealing the fluid handling component to each other. Often it is the combined design of the flanges and the gasket that is relevant for other problems that might occur, such as protrusion of the gasket into the fluid flow path between the components, which can happen during initial connection of the coupling or during a period of elevated process temperatures. This may in turn cause problems in form of flow restriction, cell shear, system contamination and fluid retention. In the case of under compression fluid entrapment and leakage may occur.

A number of couplings for connecting and sealing fluid handling components have been suggested and take one or more of the above problems into account. For example, patent documents EP961895B1 and US2012/0074694A1 describes coupling techniques that address the relevance of compression of a gasket that is arranged between flanges. The techniques seem to successfully address some aspects that are important for accomplishing proper coupling. However, it is estimated that couplings may still be improved in respect of providing a seal that is both efficient and durable.

### Summary

It is an object of the invention to provide an improved coupling for connecting and sealing a first and a second fluid handling component to each other. In particular, it is an object to improve the capability to prevent leakage. To solve these objects a coupling for connecting and sealing a first and a second fluid handling component to each other is provided. The coupling comprises a first annular flange, a second annular flange, a flange clamp and a gasket.

The first annular flange is connected to the first fluid handling component and comprises, as seen in a radial direction of the annular flange, a first annular groove, an intermediate section, a second annular groove and an abutment area. The second annular flange is connected to the second fluid handling component and comprises, as seen in a radial direction of the annular flange, a first annular groove, an intermediate section, a second annular groove and an abutment area. Herein, a radial direction is a direction that is parallel to the radial direction, in the direction outwards from a center of the first annular flange 32 and/or from a center of the second annular flange 42.

The flange clamp may connect the first and second flanges to each other, by pressing the abutment areas of the flanges against each other, such that, in between the annular flanges, a first annular space is formed by the first annular grooves, an intermediate space is formed by the intermediate sections, and a second annular space is formed by the second annular grooves. The gasket comprises a first annular sealing ring, a second annular sealing ring and an intermediate section that connects the first and second sealing rings to each other The first annular sealing ring is located in the first annular space, the second annular sealing ring is located in the second annular space, and the intermediate section is located in the intermediate space.

The provided coupling is advantageous in that the two annular sealing rings provide a very efficient seal, where the second sealing ring may act as a backup in case the first ring fails. Also, having two sealing rings instead of just one assists in aligning the flanges to each other. Other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a perspective view of a coupling for connecting and sealing two fluid handling components to each other,
Fig. 2 is a cross-sectional side view of the coupling of Fig. 1,
Fig. 3 is an exploded, perspective view of the coupling of Fig. 1,
Fig. 4 is an enlarged view of a portion of the coupling of Fig. 1, with a gasket arranged in between two flanges,
Fig. 5 corresponds to Fig. 4, but without a gasket arranged in between the two flanges,
Fig. 6 is a front view of a gasket that is part of the coupling of Fig. 1,
Fig. 7 is a perspective view of the gasket of Fig. 6,
Fig. 8 is a partial, cross-sectional view of the gasket of Fig. 6, as seen along line A-A,
Fig. 9 is a partial, cross-sectional view of the gasket of Fig. 6, as seen along line B-B, and
Fig. 10 is a side view of two couplings for connecting and sealing three fluid handling components to each other.

### Detailed description

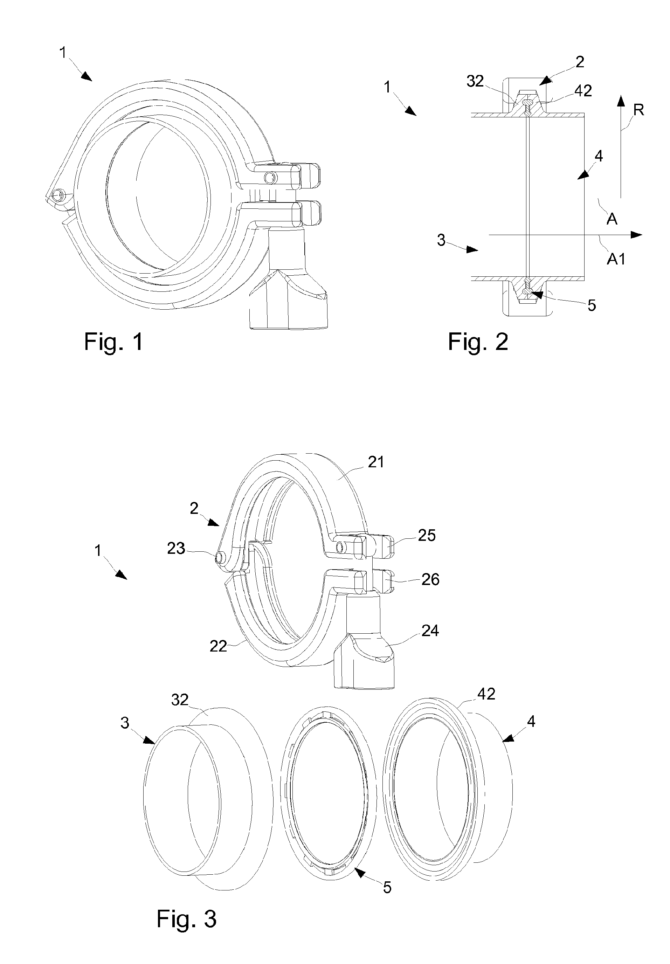

With reference to Figs 1 and 2 a coupling 1 is illustrated. The coupling 1 connects and seals a first fluid handling component 3 and a second fluid handling component 4 to each other. The fluid handling components 3, 4 have in the illustration the form of pipe ends or pipe sections, but may of course have any the form of any kind of fluid handling component. For example, any of the fluid handling components 3, 4 may be a pipe, valve, pump, strainer, filter, compensator, sight glass, measuring device, sensor, mixer, or any other type of fluid handling component.

The coupling 1 has a first annular flange 32 that is connected to the first fluid handling component 3, and a second annular flange 42 that is connected to the second fluid handling component 4. The annular flanges 32, 42 are axially aligned, along a center axis A of the coupling 1. A gasket 5 is arranged between the annular flanges 32, 42, and the flanges are pressed and held towards each other by a flange clamp 2. The flange clamp 2 presses the annular flanges 32, 42 towards each other in an axial direction A1 of the coupling 1, i.e. in a direction that is parallel to or coincides with the axis A. The flange clamp 2 also fixates the annular flanges 32, 42 in a radial direction R of the annular flanges 32, 42, such that they are aligned with the axis A. The axial direction A1 is perpendicular to the radial direction R.

With further reference to Fig. 3, the flange clamp 2 has two parts 21, 22 that are joined by a hinge 23 on one side. On an opposite side the flange clamp 2 has two tabs 25, 26 that are engaged and pressed together by a wing nut 24. The inner surfaces of the parts 21, 22 match the outer surfaces of the annular flanges 32, 42, and when the wing nut 24 is tightened the flange clamp 2 presses the flanges 32, 42 in the axial direction towards each other, fixate the flanges 32, 42 in the radial direction R such that they become axially aligned.

The flange clamp 2 is a conventional flange clamp and the outer surfaces of the flanges 32, 42 are matched to the flange clamp according to conventional techniques and principles. The illustrated flange clamp 2 is only one example of flange clamps that may be used. Any other type of flange clamp may be used just as well, and any matching type of flanges may be used, including a type that is fitted with threads that match threads of a mating flange clamp.

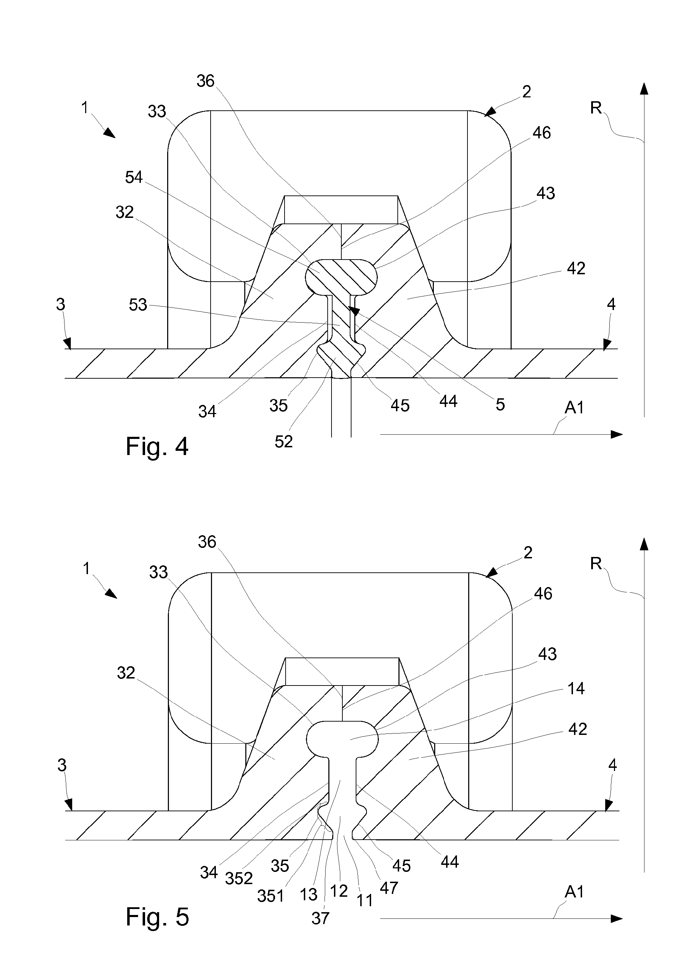

The main feature of the improved coupling that has been provided lies in annular grooves in the flanges 32, 42, which form annular spaces in which the gasket 5 is arranged. Specifically, with reference to Figs 4 and 5, the first annular flange 32 has, as seen in the radial direction R of the first annular flange 32 and in said order (outward in the radial direction), a first annular groove 35, an intermediate section 34, a second annular groove 33 and an abutment area 36. The second annular flange 42 has, as seen in the radial direction R of the second annular flange 42 and in said order (outward in the radial direction), a first annular groove 45, an intermediate section 44, a second annular groove 43 and an abutment area 46.

The two flanges 32, 42 have similar dimensions and similar shapes and locations for the annular grooves 35, 45, 33, 43, for the intermediate sections 34, 44 and for the abutment areas 36, 46. When the flange clamp 2 connects the two flanges 32, 42 to each other it presses the flanges 32, 42 towards each other until their abutment areas 36, 46 meet each other. Then, between the flanges 32, 42 and when the flanges 32, 42 are pressed towards each other, a first annular space 12 is formed by the first annular grooves 35, 45, an intermediate space 13 is formed by the intermediate sections 34, 44, and a second annular space 14 is formed by the second annular grooves 33, 43.

The gasket 5 has a first annular sealing ring 52, a second annular sealing ring 54 and an intermediate section 53 that connects the first and second sealing rings 52, 54 to each other. The first annular sealing ring 52 is arranged in the first annular space 12, the second annular sealing ring 54 is arranged in the second annular space 14 and the intermediate section 53 of the seal is located in the intermediate space 13.

The volumes of the first annular space 12, the intermediate space 13 and the second annular space 14 are well defined. This is accomplished by pressing the flanges 32, 42 towards each other until the abutment areas 36, 46 of the flanges 32, 42 are in direct contact with each other. This is advantageous in that it provides for defining a very precise compression of the sealing rings 52, 54 of the gasket 5, which are located in the annular spaces 12, 14.

The first annular grooves 35, 45 of the flanges 32, 42 have a respective portion 351 that is gradually deeper into their respective flange, such that a portion of the first annular space 12 becomes gradually wider. Specifically, a portion of the first annular space 12 becomes gradually wider in the radial direction R of the flanges 32, 42, outwards from a center of the flanges 32, 42. This forces the first annular sealing ring 52 to expand in a direction radially outwards, e.g. if the sealing ring 52 is heated such that it is subjected to thermal expansion. Also, the first annular sealing ring 52 may be compressed by the flanges while still ensuring that relatively little material of the seal 5 bulges into a fluid path. Instead, the gradually wider first annular space 12 directs the "bulging" radially outwards.

Each of the annular grooves 34, 45, 33, 43 of the flanges 32, 42 have a greater depth into the flanges 34, 44 than the intermediate sections 34, 44. As a result the first and second annular spaces 12, 14 are, in the axial direction A1 of the flanges 32, 42, wider than the intermediate space 13.

The second annular grooves 33, 43 of the flanges 32, 42 has a greater depth into the flanges 34, 44 than the first annular grooves 35, 45. As a result the second annular space 14 is, in the axial direction A1 of the flanges 32, 42, wider than the first annular space 12. This provides for giving the second annular sealing ring 54 an ability to guide and align the annular flanges 32, 42 to each other when connecting them together, while, for example, designing the first annular sealing ring 52 to primarily seal the coupling 1. Of course, the second annular sealing ring 54 also provides a sealing effect, and the first annular sealing ring 52 assists in aligning the annular flanges 32, 42.

The first annular flange 32 and the second annular flange 42 have, as seen in the radial direction R of the annular flanges 32, 42, a respective innermost cut-out 37, 47, which form an innermost space 11 between the annular flanges 32, 42. The innermost space 11 is innermost in the sense that it faces an interior volume of the fluid handling components 3, 4. Thus, the innermost space 11 faces any fluid that passes through the fluid handling components 3, 4. The first annular grooves 35, 45 have a greater depth into the flanges 32, 42 than the innermost cut-outs 37, 47. Thus, the first annular space 12 is, as seen in an axial direction A1 of the flanges 32, 42, wider than the innermost space 11.

The first annular groove 35 of the first flange 32 comprises a first section 351 that is, as seen outwards in the radial direction R, followed by a second section 352, i.e. the first section 351 is closer than the second section 352 is to a center of the first annular flange 32. The second section 352 has a sharper inclination to the radial direction R, as compared with the inclination that the first section 351 has to the radial direction R. The first annular groove 45 of the second flange 42 has a shape that corresponds to the shape of the first annular groove 35 of the first flange 32. Preferably, the first annular flange 32 and the second annular flange 42 are identical from and including at least the abutment areas 36, 46, and all the way to and including to the innermost cut-outs 37, 47.

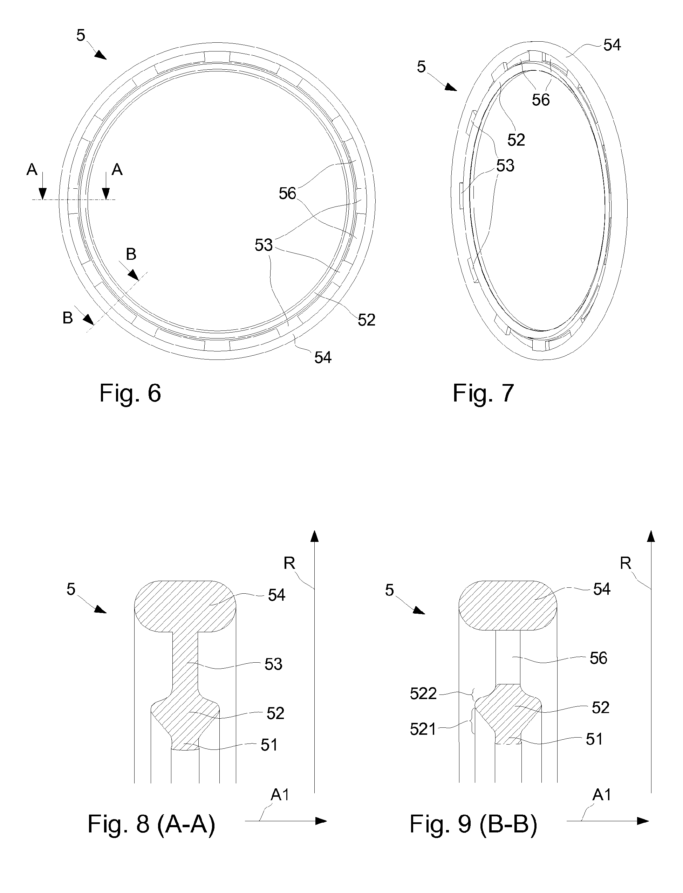

With reference to Figs 6 to 9 the gasket 5 has, as described, a first annular sealing ring 52 and a second annular sealing ring 54. The diameter of the second annular sealing ring 54 is larger than the diameter of the first annular sealing ring 52. The sealing rings 52, 54 are connected to each other by an intermediate section 53 that extends from the first annular sealing ring 52 to the second annular sealing ring 54. In the illustrated embodiment there are twelve intermediate sections 53, or connecting portions 53, which are spaced apart such that interspaces 56 are formed between the annular sealing rings 52, 54. The gasket 5 may have another number of connecting portions 53 and interspaces 56. Alternatively, one continuous connection portion may be used, such that there are no interspaces between the sealing rings 52, 54.

The first annular sealing ring 52 is, before connecting the fluid handling components 3, 4 to each other and as seen in an axial direction A1, wider than the first annular space 12. As a result the first annular sealing ring 52 is compressed when the first fluid handling component 3 and the second fluid handling component 4 are connected to each other. The second annular sealing ring 54 is, before connecting the fluid handling components 3, 4 to each other and as seen in an axial direction A1, wider than the second annular space 14. As a result the second annular sealing ring 54 is compressed when the first fluid handling component 3 and the second fluid handling component 4 are connected to each other.

The intermediate section 53 of the gasket 5 is, when the fluid handling components 3, 4 are connected to each other and as seen in the axial direction A1, smaller or thinner than the intermediate space 13. As a result an empty space is formed in the intermediate space 13 when the fluid handling components 3, 4 are connected to each other and when the seal 5 is arranged between the annular flanges 32, 42. This is advantageous since in particular the first annular sealing ring 52 may expand into the intermediate space 13, for example if it is subjected to thermal expansion.

The gasket 5 has also an innermost seal ring 51 that is connected to the first sealing ring 52. The innermost seal ring 51 is thinner than the first sealing ring 52, as seen in an axial direction A1 of the annular flanges 32, 42, and is located in the innermost space 11 between the annular flanges 32, 42.

The external shape of the sides of the first annular sealing ring 52 corresponds to the sides of the first annular space 12. The first annular sealing ring 52 has a first section 521 that is, as seen in the radial direction R, followed by a second section 522. The second section 522 has a sharper inclination to the radial direction R, as compared with the first section 521.

The gasket 5 is made of any material that is conventionally used for gaskets. Thus, it may typically have elastomeric properties. The other components of the coupling 1, including the flange clamp 2, the first annular flange 32 and the second annular flange 42, are made of metal or of any other material that may be used for flanges.

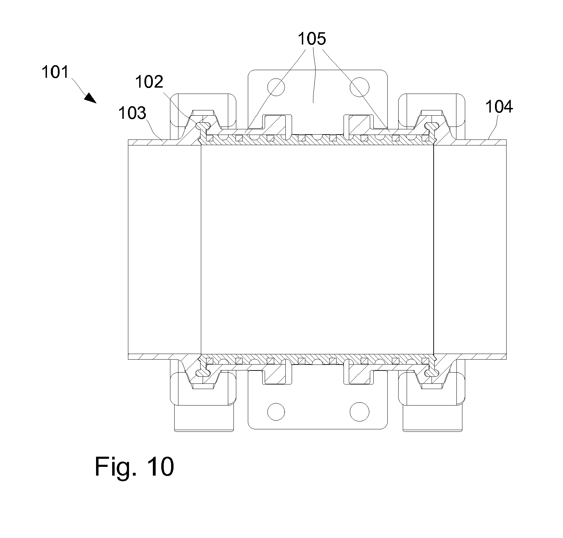

With reference to Fig. 10 two couplings for connecting and sealing three a fluid handling component to each other are illustrated. Here the first and second fluid handling components 103, 104 have the form of pipe ends, while the third fluid handling component 105 is a compensator that is arranged between the first and second fluid handling components 103, 104. A gasket arrangement 102 is part of the compensator and has at its side ends a shape that corresponds to shape of the sides of the gasket 5, which thus provides similar advantages as for the gasket 5.

From the description above follows that, although various embodiments of the invention have been described and shown, the invention is not restricted thereto, but may also be embodied in other ways within the scope of the subject-matter defined in the following claims.

## Claims

1. A coupling (1) for connecting and sealing a first and a second fluid handling component (3, 4) to each other, the coupling (1) comprising
a first annular flange (32) that is connected to the first fluid handling component (3), and comprising, as seen in a radial direction (R) of the annular flange (32), a first annular groove (35), an intermediate section (34), a second annular groove (33) and an abutment area (36),
a second annular flange (42) that is connected to the second fluid handling component (4), and comprising, as seen in a radial direction (R) of the annular flange (2), a first annular groove (45), an intermediate section (44), a second annular groove (44) and an abutment area (46),
a flange clamp (2) for connecting the first and second flanges (32, 42) to each other, by pressing the abutment areas (36, 46) of the flanges (32, 42) against each other, such that, in between the annular flanges (32, 42),
- a first annular space (12) is formed by the first annular grooves (35, 45),
- an intermediate space (13) is formed by the intermediate sections (34, 44), and
- a second annular space (14) is formed by the second annular grooves (33, 43),
a gasket (5) that comprises a first annular sealing ring (52), a second annular sealing ring (54) and an intermediate section (53) that connects the first and second sealing rings (52, 54) to each other, wherein
the first annular sealing ring (52) is located in the first annular space (14), the second annular sealing ring (54) is located in the second annular space (14), and the intermediate section (53) is located in the intermediate space (13).

2. A coupling (1) according to claim 1, wherein the abutment areas (36, 46) of the flanges (32, 42) are in direct contact with each other.

3. A coupling (1) according to claim 1 or 2, wherein the first annular grooves (35, 45) of the flanges (32, 42) have a respective portion (351) that is gradually deeper, such that a portion of the first annular space (12) becomes gradually wider.

4. A coupling (1) according to any one of claims 1 - 3, wherein each of the annular grooves (34, 45, 33, 43) of the flanges (32, 42) have a greater depth into the flanges (34, 44) than the intermediate sections (34, 44), such that the first and second annular spaces (12, 14) are, in an axial direction (A1) of the flanges (32, 42), wider than the intermediate space (13).

5. A coupling (1) according to any one of claims 1 - 4, wherein each of the second annular grooves (33, 43) of the flanges (32, 42) have a greater depth into the flanges (34, 44) than the first annular grooves (35, 45), such that the second annular space (14) is, in an axial direction (A1) of the flanges (32, 42), wider than the first annular space (12).

6. A coupling (1) according to any one of claims 1 - 5, wherein the first annular flange (32) and the second annular flange (42) have, as seen in a radial direction (R) of the annular flanges (32, 42), a respective innermost cut-out (37, 47), which form an innermost space (11) between the annular flanges (32, 42).

7. A coupling (1) according to claim 6, wherein the first annular grooves (35, 45) have a greater depth into the flanges (34, 44) than the innermost cut-outs (37, 47), such that the first annular space (12) is, as seen in an axial direction (A1) of the flanges (32, 42), wider than the innermost space (11).

8. A coupling (1) according to any one of claims 1 - 7, wherein the first annular groove (35) of the first flange (32) comprises a first section (351) that is, as seen in the radial direction (R), followed by a second section (352), the second section (352) having a sharper inclination to the radial direction, as compared with the first section (351).

9. A coupling (1) according to any one of claims 1 - 8, wherein the first annular sealing ring (52) is, before connecting the fluid handling components (3, 4) to each other and as seen in an axial direction (A1), wider than the first annular space (12).

10. A coupling (1) according to any one of claims 1 - 9, wherein the second annular sealing ring (54) is, before connecting the fluid handling components (3, 4) to each other and as seen in an axial direction (A1), wider than the second annular space (14).

11. A coupling (1) according to any one of claims 1 - 10, wherein the intermediate section (53) of the gasket (5) is, when the fluid handling components (3, 4) are connected to each other and as seen in an axial direction (A1), smaller than the intermediate space (13), such that there is an empty space formed in the intermediate space (13) when the fluid handling components (3, 4) are connected to each other and the seal (5) is arranged between the annular flanges (32, 42).

12. A coupling (1) according to any one of claims 1 - 11, wherein the intermediate section (53) comprises a number of connecting portions (53) that are spaced apart, such that interspaces (56) are formed between the annular sealing rings (52, 54).

13. A coupling (1) according to any one of claims 1 - 12, wherein the gasket (5) comprises an innermost seal ring (51) that is connected to the first sealing ring (52), the innermost seal ring (51) being thinner than the first sealing ring (52), as seen in an axial direction (A1) of the annular flanges (32, 42).

14. A gasket (5) for sealing a coupling (1) according to any one of claims 1 - 13, the gasket comprising a first annular sealing ring (52), a second annular sealing ring (54) and an intermediate section (53) that connects the first and second sealing rings (52, 54) to each other.
